Europäisches Patentamt

European Patent Office

Office européen des brevets

(11) Numéro de publication: **0 404 667**

**A1**

## (12) DEMANDE DE BREVET EUROPEEN

(21) Numéro de dépôt: 90401730.8

(22) Date de dépôt: 19.06.90

(51) Int. Cl.⁵: **F02B 47/02, F02M 25/02**

(30) Priorité: 20.06.89 FR 8908211

(43) Date de publication de la demande:
27.12.90 Bulletin 90/52

(84) Etats contractants désignés:
AT BE CH DE FR GB IT LI SE

(71) Demandeur: **Prachar, Cyril**
**"Le Titien" Quai du Nouveau Port de**
**Fontvieille**
**MC-98000 Monaco(MC)**

(72) Inventeur: **Prachar, Cyril**
**"Le Titien" Quai du Nouveau Port de**
**Fontvieille**
**MC-98000 Monaco(MC)**

(74) Mandataire: **Beauchamps, Georges et al**
**Cabinet Z.Weinstein 20, avenue de Friedland**
**F-75008 Paris(FR)**

(54) **Procédé de combustion d'un mélange carburant-air dans un cylindre d'un moteur à combustion interne et système pour la mise en oeuvre de ce procédé.**

(57) L'invention concerne un procédé de combustion d'un mélange carburant-air dans un cylindre d'un moteur à combustion interne.

Le moteur comprend une chambre de combustion de volume variable par le déplacement d'un piston dans ce cylindre, selon un mouvement de va-et-vient, la combustion s'effectuant en présence d'un liquide comportant au moins un pourcentage élevé d'eau. Le procédé est caractérisé en ce que le liquide est introduit dans la chambre de combustion par injection pendant que la température et la pression dans la chambre sont élevées à la suite de l'allumage du mélange, de façon à produire une dissociation du liquide en oxygène et hydrogène et une composition de ce dernier.

Le liquide est introduit à l'aide d'un injecteur comprenant un ensemble mobile (13) commandé par la pression dans la chambre de combustion.

L'invention est utilisable pour la lutte contre la pollution de l'environnement dûe au gaz d'échappement du véhicule automobile.

FIG.1

## Procédé de combustion d'un mélange carburant-air dans un cylindre d'un moteur à combustion interne et système pour la mise en oeuvre de ce procédé.

L'invention concerne un procédé de combustion d'un mélange carburant-air dans un cylindre d'un moteur à combustion interne, comprenant une chambre de combustion de volume variable par le déplacement d'un piston dans ce cylindre, selon un mouvement de va-et-vient, et un système pour la mise en oeuvre de ce procédé.

On connaît déjà des procédés et systèmes où la combustion du mélange carburant-air s'effectue en présence de l'eau introduite, le cas échéant sous forme de vapeur d'eau, pour réduire les polluants atmosphériques dans les gaz d'échappement et la consommation de carburant. Pour atteindre ce but, l'eau est introduite dans le courant d'air d'admission ou du mélange air-carburant.

Cette technique connue s'est avérée peu efficace et ne constitue pas une solution satisfaisante au grave problème de la pollution de l'environnement par les gaz d'échappement notamment des véhicules automobiles.

La présente invention a pour objectif de proposer un procédé et un systsème, qui assurent une combustion complète du carburant dans la chambre de combustion d'un cylindre d'un moteur à combustion interne de façon que les gaz d'échappement soient exempts de polluants atmosphériques.

Pour atteindre ce but, le procédé selon l'invention est caractérisé en ce que le liquide est introduit dans la chambre de combustion par injection pendant que la température et la pression dans la chambre sont élevées à la suite de l'allumage du mélange, de façon à produire une dissociation de l'eau en oxygène et hydrogène et une combustion de ce dernier.

Selon une caractéristique avantageuse de ce procédé, on injecte le liquide à l'aide d'un injecteur qui est commandé par la pression dans la chambre de combustion lorsque cette pression lors de son accroissement à la suite de l'allumage du mélange dépasse une valeur prédéterminée.

Le système pour la mise en oeuvre de ce procédé comporte un injecteur comprenant une chambre de refoulement de liquide, qui est remplie périodiquement avant chaque combustion d'une quantité de liquide prédéterminée et est de volume variable par un piston exerçant dans celle-ci, à la suite de chaque allumage, une course de compression, sous l'effet de la pression dans la chambre de combustion, lorsque celle-ci a dépassé une valeur prédéterminée, à l'encontre d'un ressort de rappel, la chambre de refoulement étant reliée à la chambre de combustion lorsque la pression dans la chambre de refoulement dépasse une valeur de seuil prédéterminée.

Selon une caractéristique avantageuse de l'invention, l'injecteur comprend un corps creux en forme d'un cylindre qui est susceptible d'être placé dans la culasse du cylindre du moteur, dont l'espace interne communique avec la chambre de combustion et qui enferme un ensemble fixe solidaire de l'extrémité du corps d'injecteur, qui est éloigné de l'extrémité ouverte vers la chambre de combustion, et un ensemble mobile dans la partie du corps qui communique avec la chambre de combustion, les ensembles fixe et mobile comportant des éléments coaxiaux qui délimitent entre eux la chambre de refoulement précitée et le ressort de rappel étant coaxialement interposé, entre ces deux ensembles.

Selon une autre caractéristique avantageuse de l'invention, l'ensemble fixe est traversé par un canal qui est relié à la source de liquide d'injection par l'intermédiaire d'une soupape anti-retour adaptée pour être fermée lorsque la pression dans la chambre de refoulement précitée dépasse une valeur de seuil relativement faible prédéterminée.

Selon encore une autre caractéristique avantageuse de l'invention, l'ensemble mobile est traversé par un canal reliant la chambre de refoulement à la chambre de combustion et dans lequel est monté un dispositif de soupape adaptée pour s'ouvrir à l'encontre du ressort de rappel de l'ensemble mobile 13, sous l'effet de la pression dans la chambre de refoulement.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 montre sous forme d'une coupe axiale la structure d'un dispositif injecteur selon l'invention, et de façon schématique, le circuit d'alimentation en liquide de cet injecteur ; et

La figure 2 est une vue en coupe le long de la ligne II-II de la figure 1.

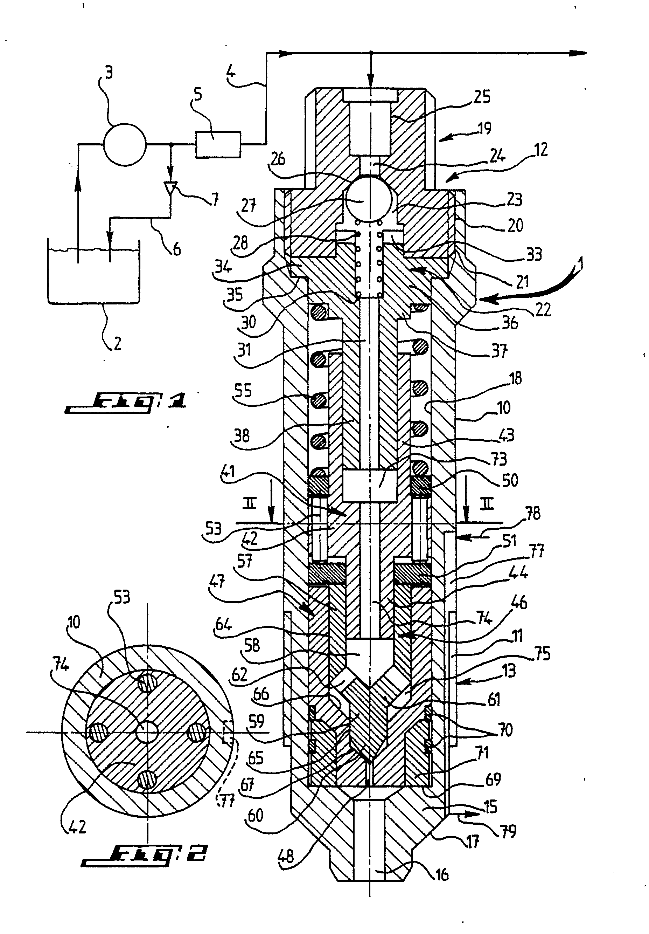

En se reportant à la figure 1, on constate que le dispositif injecteur 1 qui constitue un mode de réalisation avantageux du dispositif d'injection d'un liquide dans une chambre de combustion d'un moteur a combustion interne (non représenté) pour la mise en oeuvre du procédé selon l'invention, est alimenté en liquide à partir d'un réservoir 2, par l'intermédiaire d'une pompe 3 et à travers une conduite d'amenée de liquide 4. Dans cette conduite est monté un dispositif de mesure 5 de la pression du liquide. De la conduite d'amenée 4, entre la pompe 3 et le dispositif de mesure 5 part une conduite de retour de liquide 6, qui est équipée d'une soupape 7 réglée à un seuil de pression prédéterminé et débouche dans le réservoir 2. Comme cela est schématiquement indiqué par les flèches, la conduite d'amenée de liquide 4 peut relier un certain nombre d'injecteurs au système d'alimentation en liquide, qui vient d'être décrit.

Les dispositifs d'injecteurs sont adaptés pour être montes dans la culasse d'un moteur à combustion interne. A chaque cylindre du moteur sera alors associé un dispositif injecteur 1.

Un tel dispositif injecteur 1 comprend essentiellement un corps creux 10 en forme d'un cylindre qui est pourvu sur sa surface cylindrique externe d'une partie filetée 11 permettant son vissage dans un alésage préalablement pratiqué dans la culasse et enferme un ensemble 12 d'éléments fixes et un ensemble 13 d'éléments mobiles. L'ensemble 12 est monté fixe dans le corps d'enveloppe 10 au niveau de l'extrémité reliée à la conduite d'amenée de liquide 4. L'ensemble mobile 13 est disposé dans la partie du corps creux 10 qui communique avec l'intérieur de la chambre de combustion du cylindre auquel l'injecteur 1 est associé. A son extrémité destinée à être engagée dans la culasse, le corps d'enveloppe 10 comporte une paroi transversale 15 qui s'étend radialement vers l'intérieur du corps, délimite un canal axial 16 et présente une surface extérieure 17 conique destinée à assurer l'étanchéité lors du montage de l'injecteur dans la culasse. C'est à travers le canal axial 16 que l'espace cylindrique interne 18 du corps d'enveloppe 10 communique avec la chambre de combustion du cylindre du moteur à combustion interne.

L'ensemble fixe 12 comprend essentiellement un élément formant bouchon 19 pourvu à une portion de surface cylindrique extérieure 20 d'un filetage permettant son vissage dans l'extrémité cylindrique 21 d'un diamètre supérieur au diamètre du restant de l'espace interne 18, et un élément 22 qui est axialement aligné avec l'élément 19 et présente plusieurs portions cylindriques axialement juxtaposées et de diamètres différents.'

L'élément de bouchon 19 est axialement percé et ce perçage comprend, de l'extrémité axialement interne vers l'extrémité axiale externe, une cavité 23 à surface interne étagée sensiblement cylindrique, un tronçon de canal 24 d'un diamètre plus faible et un évidement sensiblement cylindrique 25 d'un diamètre plus grand pour le raccordement de l'injecteur à la conduite d'amenée de liquide 4. La paroi de fond de l'extrémité 23 présente une surface tronconique 26 convergeant en direction du tronçon de canal 24. Cette surface 26 constitue le siège d'une soupape dont le corps mobile est formé par une bille 27. Cette dernière est axialement mobile dans la cavité 23, et est susceptible d'être soulevée de son siège 26 à l'encontre d'un ressort de rappel 28. Celui-ci prend appui par une extrémité sur la bille 27 et par son autre extrémité sur un épaulement 30 pratiqué dans un canal axial 31 qui traverse entièrement l'élément 22 de l'ensemble fixe 12.

Cet élément 22 comprend, axialement juxtaposées à partir de l'élément bouchon 19, à la suite d'un embout cylindrique 33 de centrage dans la cavité 23 du bouchon, plusieurs portions cylindriques dont le diamètre diminue en direction de l'extrémité interne de l'élément 22, à savoir une portion formant bride 34 de retenue par serrage entre la surface frontale interne du bouchon 19 et l'épaulement 35 formé entre la cavité 21 et l'espace interne 18 du corps d'enveloppe 10, une portion 36 de centrage dans cet espace 18, une portion intermédiaire 37 et un embout tubulaire 38.

L'ensemble mobile 13 comprend plusieurs pièces principales axialement alignées et s'engageant coaxialement, partiellement les unes dans les autres. Une première pièce 41 comporte une partie axialement centrale 42 en forme de collet dont la surface cylindrique est en contact de coulissement avec la surface interne cylindrique du corps d'enveloppe 10 et, de part et d'autre du collet, une partie tubulaire axiale 43 dans laquelle s'engage axialement mobile l'embout 38 de l'ensemble fixe, et un embout cylindrique 44 s'engageant dans une deuxième pièce 46 de l'ensemble mobile, qui est configurée pour former un organe d'aiguille d'injection et est à cette fin axialement mobile dans une troisième pièce cylindrique creuse 47 dont l'extrémité axialement externe est intérieurmeent conformée en siège d'aiguille et percée par un canal axial étroit 48.

De part et d'autre du collet 42 de la première pièce 41 sont prévues des bagues cylindriques 50, 51 qui sont montées coulissantes et coaxialement sur respectivement la partie tubulaire 43 et l'embout 44. Ces bagues présentent le même diamètre extérieur que le collet. Ce dernier est percé de quatre alésages axiaux qui sont angulairement régulièrement répartis et reçoivent chacun un galet 53 de forme cylindrique et de longueur légèrement supérieure à la largeur axiale du collet. Les extrémités des galets 53 viennent en appui sur les faces frontales en regard des bagues 50 et 51.

La face frontale de la bague 50, qui est opposée à celle adjacente au collet 42, sert de surface d'appui pour un ressort hélicoïdal 55 qui s'étend axialement dans l'espace annulaire ménagé entre la surface cylindrique interne du corps d'enveloppe 10 et la partie tubulaire 43 de la pièce 41 de l'ensemble mobile et prend appui par son autre extrémité sur l'épaulement forme entre les portions annulaires cylindriques 36 et 37 de la pièce 21 de l'ensemble fixe 12. Le ressort 55 est précontraint.

La pièce d'aiguille 46 comporte deux portions axialement alignées, une première portion cylindrique creuse 57 d'un diamètre plus grand et destiné à recevoir dans son espace cylindrique interne 58 de façon coulissante l'embout 44 de la pièce 41, et une deuxième portion cylindrique pleine 59 qui se termine par une pointe 60 formée par des parois coniques. Les deux portions 57 et 59 de la pièce 46 sont reliées par une paroi tronconique 61 convergeant en direction de la pointe et entièrement traversée d'un certain nombre de trous 62.

La troisième pièce 47 qui est montée coulissante dans le fond du corps d'enveloppe 10 comporte un espace interne divisé en deux parties cylindriques 64, 65 de diamètres différents, destinés à recevoir de façon axialement coulissante respectivement les portions 57 et 59 de la pièce d'aiguille 46. Ces deux parties sont reliées par une surface intermédiaire tronconique 66 en face de la portion tronconique 60 de l'aiguille 46. Le fond 67 de la pièce 47, qui fait axialement suite à la partie cylindrique 65 de faible diamètre présente une surface interne conique 66 et est traversée par le trou axial étroit débouchant susmentionné 48. Comme il ressort de la figure 1, la surface interne conique 67 forme avec l'axe de l'injecteur un angle qui est quelque peu supérieur à l'angle correspondant de la pointe 60 de l'aiguille 46. Grâce à cette configuration du fond de la pièce 47, celui-ci peut constituer le siège de l'aiguille 46.

L'extrémité fermée de la pièce 47 est susceptible de prendre appui par sa surface frontale sur un épaulement 69 au fond du corps d'enveloppe 10. Cette extrémité de la pièce 47 porte en outre au niveau de sa surface périphérique deux segments d'étanchéité 70 destinés à assurer l'étanchéité entre les surfaces en contact, du corps d'enveloppe 10 et de la pièce 47. Pour faciliter un remplacement des segments 70, l'extérmité en question de la pièce 47 porte une partie annulaire 71 qui est emmanchée sous pression sur la pièce 47 et porte l'un des segments 70. Comme l'illustre la figure, après démontage de cette pièce 71, le deuxième segment 70 peut être enlevé. Il est encore à noter que c'est par la surface frontale libre de la pièce annulaire de support de segment 71 que la pièce 47 prend appui sur le fond 69 du corps d'enveloppe 10.

Les différentes pièces constitutives du dispositif d'injecteur 10 présentent des caractéristiques spécifiques qui seront décrites ci-après et permettent au dispositif 10 d'accomplir la fonction d'un injecteur.

Comme le montre la figure 1, l'embout 36 fixe, en s'engegeant dans l'espace interne de la partie tubulaire 43 de l'ensemble mobile 12 délimite avec ce dernier une chambre 73 dont le volume est variable par le déplacement axial de la pièce 41. La chambre 73 communique avec l'espace interne 58 de la pièce d'aiguille 46 par un canal axial 74. Lorsque la pointe de l'aiguille 46 se trouve sur son siège 67, comme cela est illustré à la figure 1, les parois en regard de l'aiguille 46 et de la pièce 47, au niveau de leurs parties tronconiques 61 et 66 délimitent un espace annulaire 75 qui est en communication avec la chambre 73 par l'intermédiaire du canal 74 et les trous débouchant 62 de l'aiguille. On constate que la pièce d'aiguille 46 est repoussée dans sa position représentée où la pointe 60 obture le canal 48 par le ressort précontraint 55, la force de rappel étant transmise par la bague 50, les galets 53 et la bague 51 qui prend appui sur l'extrémité ouverte de la pièce d'aiguille 46, une certaine distance axiale étant ménagée entre la bague 51 et la pièce 47 qui comporte le siège pour l'aiguille 46.

Il est encore à noter que le dispositif injecteur peut être pourvu d'un système de refroidissement par exemple par circulation forcée d'un fluide de refroidissement au niveau des parties les plus exposées à la chaleur.

A cette fin, comme cela est représenté schématiquement, on pourrait usiner à la périphérie du corps d'enveloppe des rainures axiales 77 qui seraient alors en communication avec des canaux appropriés pratiqués dans la culasse et indiqués schématiquement par les flèches 78 et 79 à la figure 1. Cette figure ainsi que la figure 2 ne montrent qu'une rainure axiale. Bien entendu on pourrait prévoir une multitude de rainures, par exemple quatre qui seraient alors réparties de façon angulairement équidistante autour de l'axe de l'enveloppe 10.

On pourrait encore fabriquer la pièce la plus exposée à la chaleur telle que la pièce 47 ou le cas échéant, seulement la partie 71 en un matériau résistant à la chaleur tel que par exemple de la porcelaine.

Après la description détaillée de la structure du dispositif injecteur 1, on décrira ci-après le fonctionnement de celui-ci dont résulte également la particularité du procédé selon l'invention.

Le dispositif injecteur est supposé être monté dans la culasse d'un cylindre d'un moteur à combustion interne, par exemple à côté d'une bougie d'allumage.

On suppose en outre que l'aiguille 46 occupe sa position de fermeture du canal 48. Sous l'effet de la pression régnant dans la conduite d'amenée de liquide 4, le dispositif injecteur 10 se remplit de liquide, la bille de soupape 27 étant repoussée de son siège 26 à l'encontre du ressort faiblement précontraint 28. Lorsque le piston du cylindre qu'équipe l'injecteur 10 atteint son point mort haut et l'allumage du mélange carburant-air se produit dans la chambre de combustion, la pression augmente brusquement dans celle-ci. Cette pression agit par l'intermédiaire du canal 16 du corps d'enveloppe 10 sur l'extrémité de la pièce 47. Lorsque la pression atteint une valeur supérieure à la force de précontrainte du ressort hélicoïdal 55, la pièce 47, et avec lui l'aiguille 46 et la pièce 41, c'est-à-dire l'ensemble de la partie mobile 13, est repoussé à l'encontre du ressort 55. Ce déplacement axial a pour effet que le volume de la chambre 73 de l'injecteur diminue, ce qui provoque successivement la fermeture de la soupape à bille 27 et, sous l'effet de l'augmentation de la pression du liquide en raison de la diminution du volume total interne de l'injecteur, le soulèvement de l'aiguille 46 de son siège lorsque la pression du liquide dans l'espace 75 entre les surfaces tronconiques 61 et 66 respectivement de l'aiguille 46 et de la pièce de siège d'aiguille 47 dépasse la valeur de la force de compression du ressort 55. L'aiguille étant ainsi soulevée, une quantité prédéterminée en fonction du volume de la chambre 73 est éjectée à travers le canal étroit 43 de la pièce de siège d'aiguille 47 et le canal 16 du corps d'enveloppe 10 dans la chambre de combustion. Suite à cette éjection du liquide de l'injecteur et l'injection dans la chambre de combustion, la pression à l'intérieur de l'injecteur diminue, ce qui occasionne le retour de l'aiguille 46 dans sa position de fermeture du canal d'éjection 48, sous l'effet du ressort 55. Ensuite lorsque la pression à l'intérieur de la chambre de combustion diminue, le ressort 55 est en mesure de repousser l'ensemble mobile dans sa position représentée à la figure.

A l'intérieur de la chambre de combustion, le liquide injecté se dissocie en oxygène et hydrogène sous l'effet des valeurs élevées de la pression et de la température, engendrées par la combustion du mélange carburant-air. Dans ces conditions de pression et de température particulières, l'hydrogène s'enflamme de son côté et on obtient ainsi une deuxième combustion. Ces deux combustions successives mais très rapprochées dans la mesure où la première provoque la deuxième, assurent une combustion totale du carburant si bien qu'on ne constante dans les gaz d'échappement plus aucun polluants. Cette combustion totale procure bien entendu une économie de carburant. Mais, la combustion particulière selon l'invention, donne un autre avantage très appréciable. En raison de la présence de l'injecteur 10 qui est actionné par le gaz carburant dans la chambre de combustion, on évite la pointe excessive de la pression d'explosion habituelle qui constitue une contrainte mécanique à la longue excessive pour toute la structure du moteur. Mais, grâce à la combustion plus prolongée que procure l'invention, la suppression de la pointe ne s'accompagne pas d'une diminution de l'énergie produite par la combustion.

L'invention procure un certain nombre d'autres avantages. Elle assure un réglage automatique de l'injection du liquide en fonction de la quantité du carburant injecté dans la chambre de combustion. Si le liquide qui est principalement constitué d'eau comporte en outre une faible quantité d'huile, on assure une lubrification des différentes pièces constitutives de l'injecteur. De plus, la quantité de liquide d'injection est facilement variable par variation du volume de la chambre d'injection 73. Cette variation peut être obtenue de toute manière connue appropriée. Par exemple il suffirait de disposer une rondelle d'une épaisseur appropriée dans cette chambre, le démontage et le mont(age du dispositif injecteur étant facile, comme il ressort de la description de la structure de l'injecteur et de la figure 1.

## Revendications

1. Système pour l'injection d'un liquide dans un cylindre d'un moteur à combustion interne, comprenant une chambre de combustion à volume variable par le déplacement d'un piston dans ce cylindre, selon un mouvement de va-et-vient, lequel système comporte un injecteur comprenant un corps creux formant cylindre d'enveloppe qui est susceptible d'être placé dans la culasse du cylindre du moteur, dont l'espace interne communique avec la chambre de combustion et qui enferme un ensemble fixe solidaire de l'extrémité du corps d'injecteur qui est éloigné de l'extrémité ouverte vers la chambre de combustion et un ensemble mobile dans la partie du corps qui communique avec la chambre de combustion, les ensembles fixe et mobile comportant des éléments coaxiaux qui délimitent entre eux une chambre de refoulement susceptible d'être reliée à une source dudit liquide et de volume variable sous l'effet de la pression dans la chambre de combustion s'établissant à la suite de chaque allumage, un ressort de rappel étant coaxialement interposé entre les ensembles fixes et mobiles et l'ensemble mobile étant traversé par un canal reliant la chambre de refoulement à la chambre de combustion et dans lequel est monté un dispositif de soupape adapté pour s'ouvrir à l'encontre de moyens de rappel, caractérisé en ce que le dispositif de soupape (46) comporte un élément creux en forme d'aiguille (46) axialement mobile dans une pièce (47) formant siège d'aiguille, de l'ensemble mobile (13), une chambre (75) est délimitée entre la surface interne de la pièce de siège (47) et la surface externe de l'élément d'aiguille (46), cette dernière comporte une portion de surface d'épaulement de commande en soulèvement de l'aiguille, et en ce que la chambre de refoulement (73) est en communication avec ladite chambre (75).

2. Système selon la revendication 1, caractérisé en ce que l'ensemble mobile (13) comporte trois pièces (41, 46, 47) axialement alignées et partiellement coaxialement engagées les unes dans les autres, dont deux (46, 47) constituent les éléments d'aiguille et de siège d'aiguille précités, tandis que la troisième pièce (41) constitue le piston mobile de variation du volume de la chambre de refoulement (73).

3. Système selon la revendication 2, caractérisé en ce que les moyens de rappel sont formés par le ressort de rappel (55) précité.

4. Système selon l'une des revendications 1 à 3, caractérisé en ce que chaque dispositif d'injecteur (1) est relié à un réservoir de liquide (2) par l'intermédiaire d'une pompe (3).

5. Système selon l'une des revendications précédentes, caractérisé en ce que l'ensemble fixe (12) est traversé par un canal (25, 24, 23, 31) est relié à une source de liquide (2) par l'intermédiaire d'une soupape (27) adaptée pour être fermée lorsque la pression dans la chambre de refoulement (73) dépasse une valeur prédéterminée relativement faible.

6. Système selon l'une des revendications précédentes, caractérisé en ce que la partie adjacente à la sortie de l'injection est pourvue de moyens (77) de refroidissement, avantageusement par circulation forcée d'un fluide de refroidissement, susceptible de coopérer avec des moyens (78, 79) appropriés prévus dans la culasse.

7. Système selon l'une des revendications précédentes, caractérisé en ce que les pièces les plus exposées à la chaleur sont réalisées en un matériau résistant à la chaleur, tel que de la porcelaine.

Fig. 1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-1 625 205  (W.F. GRUMME) <br> * page 2, ligne 52 - page 3, ligne 18; revendication 4; figures 1,2 * <br> --- | 1-3,5 | F 02 B  47/02 <br> F 02 M  25/02 |
| A | US-A-2 879 753  (MC KINLEY) <br> * revendication 1; figures 1,2,4 * <br> --- | 1,3-5 | |
| A | DE-C-  149 735  (BRUECKERT) <br> * page 1, ligne 27 - page 2, ligne 7; figure * <br> ----- | 1-3,5,6 | |

| DOMAINES TECHNIQUES RECHERCHES (Int. Cl.5) |
|---|
| F 02 B <br> F 02 M |

Le présent rapport a été établi pour toutes les revendications

| Lieu de la recherche | Date d'achèvement de la recherche | Examinateur |
|---|---|---|
| BERLIN | 24-07-1990 | NOVELLI B. |